# EUROPEAN PATENT SPECIFICATION

(11) **EP 2 846 584 B1**
(45) Date of publication and mention of the grant of the patent: **09.09.2015**
(21) Application number: 14002790.5
(22) Date of filing: 11.08.2014
(51) Int. Cl.: H04W 40/20, H04L 12/733

(54) **Method of message acknowledgement and /or data collection**
Verfahren zur Nachrichtenbestätigung und/oder Datensammlung
Procédé de confirmation de réception de messages et/ou de collecte de données

(30) Priority: 26.08.2013 CZ 20130651
(43) Date of publication of application: 11.03.2015
(73) Proprietor: MICRORISC s.r.o., 506 01 Jicin (CZ)
(72) Inventor: Sulc, Vladimir, 507 43 Sobotka (CZ)
(74) Representative: Reichel, Pavel

(56) References cited:
- EP-A1- 2 458 825
- US-A1- 2006 165 015

## Description

### Field of the invention

The submitted invention concerns the method of message acknowledgement and/or data collection from communication devices with packet message transmission in arranged wireless mesh networks and the method of making such acknowledgement and/or data collection available for creation of a generic platform. It concerns a method of communication in mesh networks with packet transmission and with a created routing structure utilising directional flooding and furthermore a method of message acknowledgement and data collection in arranged wireless mesh networks, its implementation as a service in devices utilising direct addressing in wireless networks to create a generic platform and devices for its implementation.

### Description of the prior art

In mesh networks with packet transmission and created routing structure utilising directional flooding, messages are sent in smaller parts called packets. Packets contain information about their recipient and are transmitted in general mesh networks from the sender to a sequence of devices until they reach the recipient. Defining the path, i.e. deciding which devices the packets will be transmitted through, is called routing. The goal of routing is to ensure the most reliable and fastest possible delivery of the packet from the sender to the recipient.

Mesh networks represent the most general network topology, where general connections may exist between any two devices in the network, which means that these devices may mutually communicate and transfer messages. A mesh network where a connection can be established between any two devices in the network is called a fully connected mesh network, however in practice the more frequent case is that only some devices may establish mutual connections.

The simplest example for a mesh network and routing is imagining the network as cities, which are interconnected by the road network, and routing as the journey of a vehicle with its cargo (the packet) from the city of the sender to the recipient. The vehicle travels from one city to another utilising the existing road network. Individual roads connecting cities represent the connections between them. The whole journey from the starting point to the endpoint is thus divided into individual roads, which we call connections in the context of general networks. In the listed example there exist many different routes, which the vehicle can use to transport the cargo from the city of the sender to the city of the recipient, and similarly in wireless real-world mesh networks there can exist many different routes for routing the packet from the sender to its recipient.

Since general mesh networks may or may not contain a connection between any pair of devices, the number of total possible connections in a network with n devices will always be lower or equal to Nₘₐₓ where Nₘₐₓ = n * (n -1) / 2. In the specific example with cities, this is the maximum number of roads in the road network between n cities.

In wireless mesh networks, devices communicate wirelessly, generally via radio waves. Connections between two communicating devices are thus usually limited by the range of these devices. Devices which are too far from each other cannot establish a mutual connection. Since the distances between individual devices are not usually known in advance in general wireless mesh networks, it is not clear in advance which devices may establish mutual connections, and thus routing, i.e. finding the route between the sender device to the recipient device of the packet, is a relatively difficult algorithmic problem, especially due to the number of possible routes and combinations of various connections.

Various routing methods for communication in mesh networks are used in practice. These include, for instance, routing based on routing tables, often used in computer technology, flooding or random routing. Routing based on sharing and distribution of routing tables or vectors is one of the most optimal methods with respect to the efficiency of packet delivery, however this comes at the cost of high requirements on the memory of the control processor or microcontroller of communication devices, especially in large networks with many devices. Flooding an unordered network, based on distributing a packet gradually into the whole network is a solution suitable for the reliable delivery of the packet, however this is far from optimal due to the specific properties of wireless networks, which generally have low data transfer speeds and problems with media sharing (conflicts in media access and their resolving). In the example above, this approach would mean traversing the whole road network in our vehicle. Random routing is used in computer technology, e.g. when the router is overloaded and may reduce packet loss, but is not suitable for wireless mesh networks for telemetry due to its low reliability.

Contrary to connected systems, where individual devices may have dedicated connections between them, wireless mesh networks share the communication spectrum. Inappropriate use of the communication spectrum and non-adherence to communication rules would lead to collisions of individual communication connections, preventing efficient communication. In our example with the road network, this would be analogous to the chaos and collisions leading to the closure of many roads that would occur if vehicles didn't follow rules such as which side of the road to use and which vehicle takes precedence.

Various techniques to prevent collision states are thus used for communication in wireless networks. The most frequently used methods are to define rules on WHEN each device may transmit (so-called Time Division Multiplexing or Time Division Multiple Access - TDMA) and also WHERE each device may transmit, i.e. which frequencies (usually specified by a channel) may be used by each communication device. Other techniques for media/spectrum access are also used in practice. CSMA, CDMA, TDMA and TMPS are only a few examples.

TDMA is often used in practice to prevent transmission collisions due to its easy implementation and reliability. TDMA is based on the fact that in a given time interval, called a time slot, only a single specified device may transmit. A group of time slots belonging to different participants is called a frame. On our road network example, the easiest way of illustrating this approach is using traffic lights, which limit traffic on shared crossroads in time-defined intervals. The manner of routing described in this patent application is based on using a time multiplex.

Since most RF circuits today allow receiving and sending on several frequencies, many systems also utilise frequency hopping (FHSS - Frequency Hopping Spread Spectrum), where either individual bits or, more commonly, groups of bits are transmitted on different frequencies. In practice this means that they may be transmitted simultaneously, since they do not interfere with each other. This manner of communication may be illustrated in our example as having multi-lane roads between cities, where several vehicles may drive on a single road simultaneously.

As previously mentioned, a general mesh network with n communication devices allows at most Nₘₐₓ connections between communication devices, where Nₘₐₓ = n * (n -1) / 2, with n being the number of communication devices in the network. Since the topology of a general wireless mesh network is not known in advance, the limit case of applying collision-free flooding via TDMA would require dedicating up to Nmax time slots for individual routings to ensure reliable delivery of the packet. However, this would be very time-inefficient. For instance, for the commonly used speed of 19.2 kbps, the transmission of a single short packet with 24 B of data in a network with 100 communication devices would result in a frame of up to 50 seconds.

Creation of a functional layout of the wireless network using packet transmission and comprising tens, hundreds or thousands of devices is an immensely difficult algorithmic process due to the gigantic amount of various layouts of such a network. This is further complicated for networks comprising communication devices with limited hardware resources (program and data memory) and communicating at low speeds, especially in the case of multiple-routing, i.e. the transfer of messages from one device to another.

The solution based on creation of functional arrangement of a generic wireless mesh network and routing technology in this network according to patent application CZ2010-873 ensures reliable and efficient delivery of messages. However, as the number of devices connected to the network grows, so grows the response time when communication with several devices is required, e.g. in case of request for acknowledgement of messages intended for a group of devices or all devices.

Wireless mesh networks are becoming increasingly popular for telemetry and automation as well as for many other applications. The areas of telemetric Automated Meter Reading (AMR), control of public lighting (Street Lighting) or distribution monitoring are good examples. These cases deploy networks with hundreds or thousands of devices and speed of data collection from the individual devices or acknowledgement of the individual devices to a superior system are therefore an important technical parameter in networks with slow transfer speeds.

An example of the prior art can be found in EP 2458 825.

### Terminology

*Initiation message* is a prompt sent by the control communication device to the network. The initiation message is sent in the form of a broadcast (i.e. message addressing all devices in the network) or as a group message (i.e. message addressing a group of devices in the network). By sending the initiation message, the control communication device initiates data collection from the slave devices as described below.

*Collective message* is an acknowledgement sent by the slave communication device to the network in response to receiving the initiation message. The collective message sent by every device in a dedicated time slot contains data from the device and data collected since the beginning of the acknowledgement frame from other devices. Collection means the method of structured data accumulation by merging.

A *frame* in communication systems utilising TDMA denotes a periodically repeating block of data consisting of a fixed number of dedicated time slots, one for each communication device operating in the network. During a frame, the individual devices in wireless networks periodically forward a packet containing data in dedicated time slots. The *initiation frame* contains a periodically forwarded packet containing an initiation message. The *acknowledgement frame* contains periodically forwarded packets containing a collective message. Forwarding involves reception and subsequent sending.

### Summary of the invention

The aim of this invention is quick and effective bulk collection of data from communication devices in wireless mesh networks and speeding up acknowledgement of group or bulk messages in these networks. The subject of the invention is the method of acknowledgement and/or data collection from communication devices in wireless mesh networks with packet message transmission, primarily designated for telemetry and automation, where every mesh network includes at least one control communication device and a set of slave communication devices.

The control communication device is used for searching through the mesh network so that every slave communication device found is assigned a unique virtual routing number in the network that is stored into its memory. The number represents the distance of the slave communication device from the control communication device determined by the number of routings. In a network arranged in such a way, message control packets are transferred from the network control communication device to all addressed slave communication devices and back through directional flooding.

The principle of the invention is based on the fact that in every addressed slave communication device after reception of an initiation message from the control communication device, through which the control communication device initiates data collection from slave communication devices that are relatively time-synchronised to the beginning of the initiation frame, a bit or a number of bits are set, which then gradually merge with acknowledgement collective messages received from other addressed slave communication devices during the acknowledgement frame that is time-synchronised to the initiation frame, whereas consequently such merged acknowledgement collective messages are gradually sent by the slave communication devices in the corresponding time slot of that acknowledgement frame from the highest virtual routing number towards the control communication device.

In every addressed slave communication device, which is relatively time-synchronised to the beginning of the initiation frame, due to reception of the initiation message from the control communication device, and after eventual processing of routing in this initiation frame, if the device is intended for routing, a bit or a number of bits are set, and then gradually being merged with acknowledgement collective messages received from other slave communication devices during the acknowledgement frame that is time-synchronised to the initiation frame, so that they are subsequently sent in this merged form by these slave communication devices in the corresponding time slot of this acknowledgement frame, from the slave communication devices with the highest virtual routing number towards the control communication device. The gradual merging of received collective messages described above and sending such aggregated data ensures that after reception and merging of all messages delivered within the acknowledgement frame, the control device obtains all inserted data from all slave communication devices.

In the initiation message from the control communication device, routed to slave communication devices, may be included additional information and in every addressed slave communication device this information is interpreted and the required sequence of instruction is performed based on this interpretation and independently from it or based on its result, one or several bits are set, which are then inserted into the collective acknowledgement message addressed to the control communication device. Timing of the acknowledgement frame, i.e. for example delay of the acknowledgement frame or length of the individual time slots in it, can be set in a similar way, i.e. based on additional information inserted into the initiation message from the control communication device.

After reception of the initiation message, relatively time-synchronised to the beginning of the frame, every addressed slave network communication device first performs the required sequence of instructions based on interpretation of the additional information inserted into the initiation message by the control device, and independently of it, or based on its result, sets one or several bits, whereas these bits are then inserted to the collective acknowledgement message addressed to the control network device.

The invention also concerns the method of making bulk acknowledgement and/or data collection accessible in the above mentioned wireless mesh networks, which is implemented as a directly addressable virtual peripheral in wireless networks so that such peripheral is served based on interpretation of messages sent to slave communication devices in the wireless network.

This concerns implementation of such bulk method of data aggregation and responses from network communication devices as a directly addressable service in wireless networks (as described in documents CZ2008-288 and CZ utility design 18679), whereas the described method of making peripherals and services accessible in a wireless network is substantially extended with a directly addressable service. This is based on the fact that after reception of the initiation message every addressed slave network communication device is relatively time-synchronised to the beginning of the frame and interprets such initiation message as a command for a virtual peripheral (service), also containing additional information, and based on this it performs the required sequence of instructions and independently of it or based on its result, sets one or several bits, whereas these bits are then inserted by it to the collective acknowledgement message addressed to the control network communication device. This way the described solution is implemented as a virtual peripheral for network services and may be used, e.g. for data collection or network management and substantially enhance the possibilities of the existing technical solution, especially for creation of a generic platform with these devices.

### Brief description of the drawings

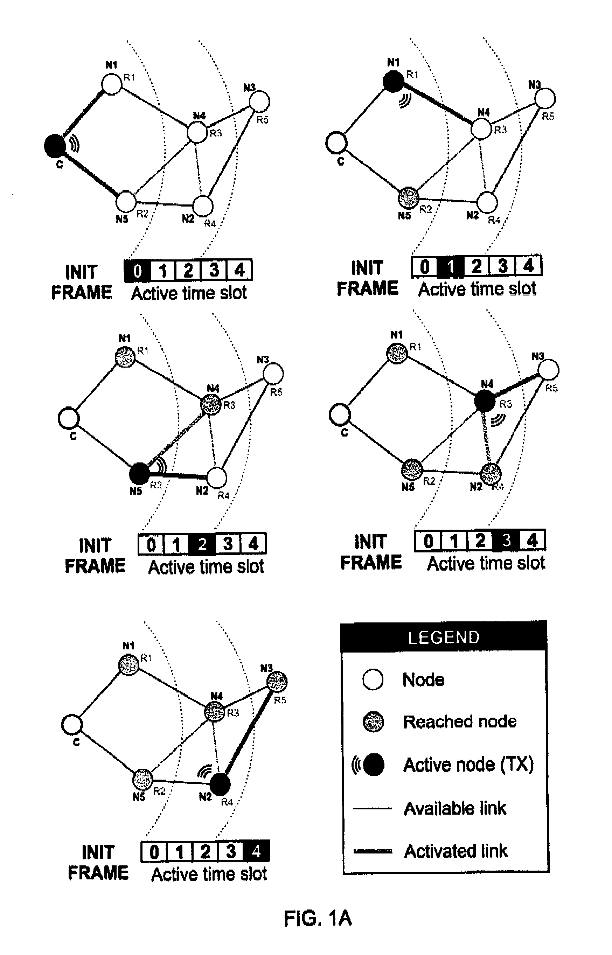

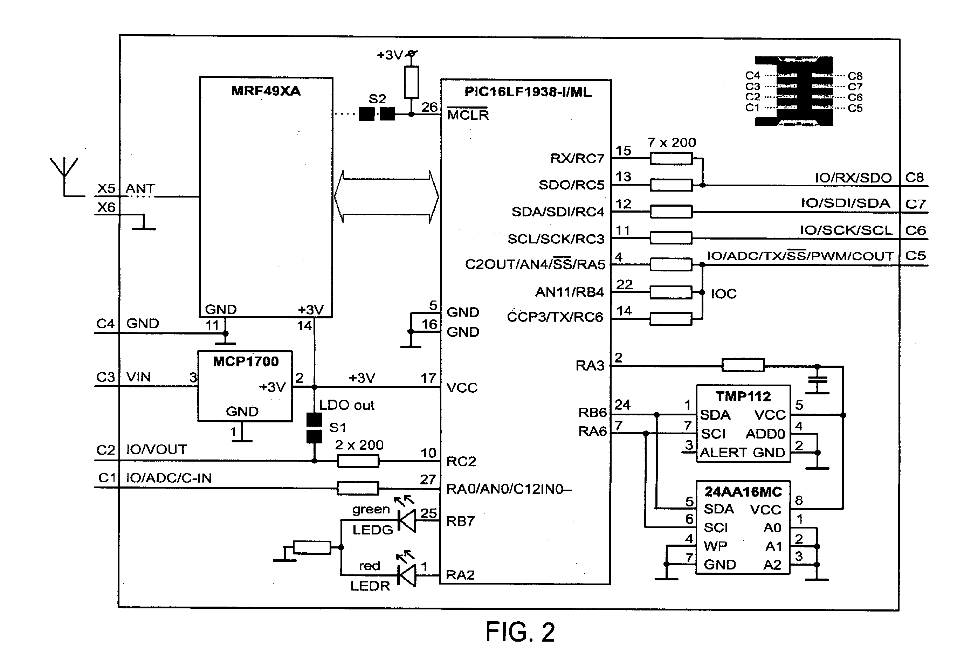

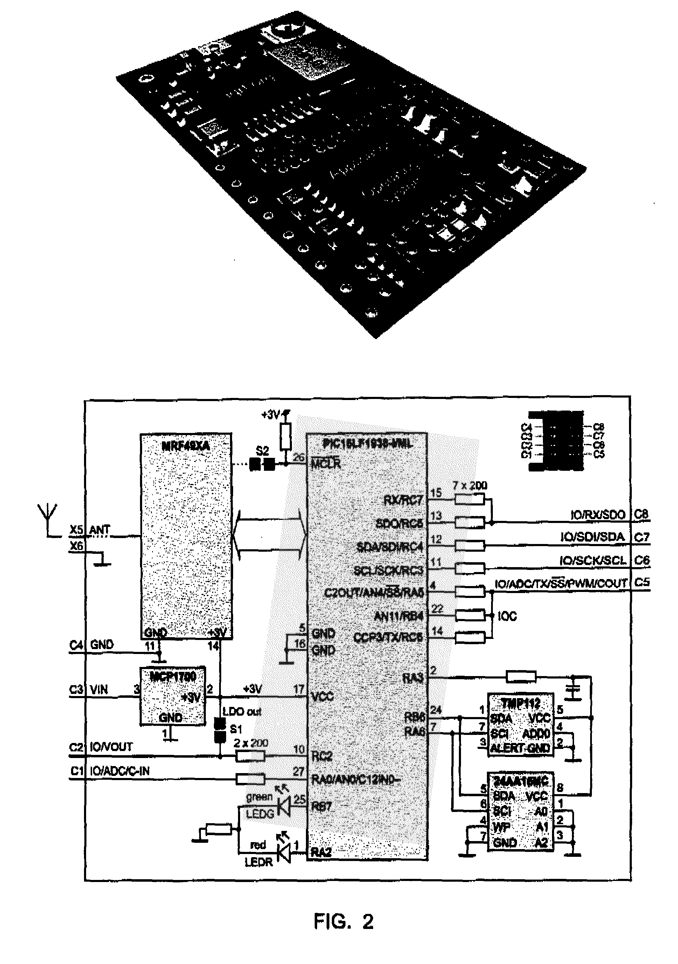

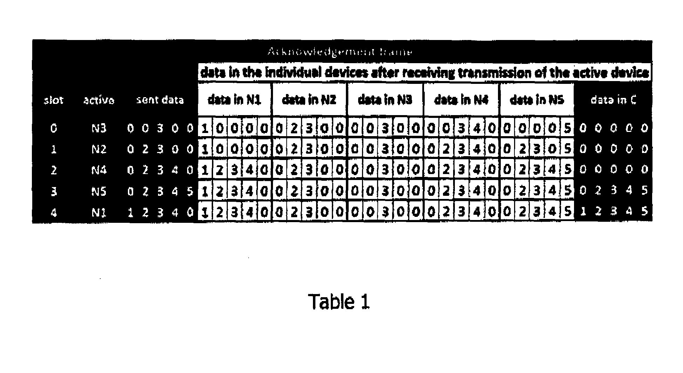

The attached drawings illustrate an example of implementation of this invention for the whole method of data collection, in the given example for one byte indicating the device number. Figure 1A and 1B show the method of routing and gradual sending of a collective message; Figure 2 shows an example of a specific implementation where the whole solution is implemented into the TR-52D transceiver module, and its simplified diagram and structural arrangement is depicted. The whole design maintains the backward compatibility of interpretation of the sent messages and support for older versions of IQRF OS.

Table 1 indicates the gradual status of data collection and merging of the data.

### Examples of preferred embodiments

The subject of the invention is the method of bulk response from slave network communication devices N and bulk collection of data with packet transmission in wireless mesh networks, based on deployment of the created virtual routing structure. The individual slave communication devices of the network - communication devices N

(with addresses N1 to N5) - have a unique virtual routing number VRN assigned by the control communication device C, which represents their distance from the control communication device C in the network based on the number of routings, whereas the network arranged in this way will be used for transmission of control packets from the control device of the network (controlling communication devices C) to all addressed slave communication devices N and back using directional flooding. Each discovered slave communication device N (with addresses N1 to N5) is assigned a unique virtual routing number VRN, specifically R1 to R5. After reception of the initiation message, relatively time-synchronised to the beginning of the frame, every addressed slave network communication device N first performs the required sequence of instructions based on interpretation of the additional information inserted into the initiation message by the control communication device C, and independently of it, or based on its result, sets one or several bits, whereas these bits are then inserted to the collective acknowledgement message addressed to the control communication (network) device C.

The method of bulk response from network slave communication devices N is based on deploying of an already created virtual routing structure in combination with the TDMA method (multiple access with time division), together ensuring efficient flooding of the network. The time slot when each network slave communication device N is active, i.e. when it may perform routing and confirm the receipt of message packets, is in this case related to the VRN assigned to that slave communication device N,

Because of the arrangement of the virtual routing structure according to unique virtual routing numbers VRN assigned by the control communication device C during searching through the network based on their distance from the control communication device C, it can be proven that the initiation message sent by the control communication device C and addressed to a group of network slave communication devices N will be in the case of routing using directional flooding from the control communication device C progressively delivered to all addressed slave communication devices N.

At the same time, it can be proven that for this arrangement of the wireless mesh network the acknowledgement collective message sent using the above mentioned method by the network slave communication devices N from the highest virtual routing number VRN towards the network control communication device C, and through merging with previously received collective messages gradually accumulating data inserted by the individual slave communication devices N, will ensure delivery of all inserted data to the control communication device C.

This can be advantageously deployed either for bulk response from the individual slave communication devices N, or for bulk data collection from these devices so that each network slave communication device N addressed by the initiation message, first forwards the received initiation message in its respective time slot of a frame, and subsequently, based on additional information in the initiation message, will progressively receive all acknowledgement messages sent by the network slave communication devices N with higher virtual routing number VRN and merge and store these for further sending in the respective time frame of the acknowledgement frame.

The subject of the invention is also implementation of this bulk method of data collection and response from network slave communication devices N as a directly addressable service in wireless networks for bulk synchronised reception of responses and data collection from network devices. It is based on the fact that after reception of the initiation message, relatively time-synchronised to the beginning of the frame, every addressed slave network communication device N interprets such initiation message as a command for a virtual peripheral (service), also containing additional information, and based on this performs the required sequence of instructions and independently of it or based on its result, sets one or several bits, whereas these bits are then inserted by it to the collective acknowledgement message addressed to the control network communication device C. The described solution is this way implemented as a virtual peripheral for network services and may be used, e.g. for data collection or for network management, thus substantially enhancing possibilities of the original technical solution especially for creating a generic platform with these devices.

For illustration, the whole method of data collection, in this case for a single byte indicating the device number, is shown on a simple example. Figure 1A and 1B illustrate the method of routing (VRN numbers marked in orange as R1, R2, R3, R4 and R5), Table 1 then records the progressive status of data collection from the individual network slave communication devices N and their merging.

In the example of a specific practical implementation described below, the whole solution was implemented to a TR-52D transceiver module, whose simplified diagram and constructional arrangement are illustrated in Figure 2. The whole design maintains the backward compatibility of interpretation of the sent messages and support for older versions of the IQRF OS operating system.

### General structure of the message:

| | | | | | | | |
|---|---|---|---|---|---|---|---|
| PI N | DLE N | CRC H | [NTW INFO] | [CRCN] | DATA | CRC D | CRC S |

Individual parts of the message contain information about the message, its destination and also the data itself. The PIN (Packet INfo) part contains control information about the packet, DLEN (Data LENgth) contains information about the length of the data stored in the DATA part, CRCH/CRCD/CRCS are used to check the consistency of the message and its parts.

### Structure of NTW INFO for network packets:

| | | | | | | | | | | |
|---|---|---|---|---|---|---|---|---|---|---|
| RX | TX | NID0 | NID1 | PID | [RTVRN] | [RTDEF] | [RTDT0] | [RTDT1] | [RTDT2] | [RTDT3] |
| | | | | | | | | | | |
| | ... ... ... | [MPRW0] | [MPRW1] | | [MPRW2] | [CRYPT0] | [CRYPT1] | [AUX0] | [AUX1] | |

To maintain backward compatibility with lower versions of the IQRF OS operating system, the structure of the message is kept, whereas the respective extension has been inserted to the part of the message intended for routing, while the device with number 0xFF (RX = 0xFF) is specified as a recipient, which denotes a bulk message addressed to all devices in the network even in previous versions of the IQRF OS operating system. For this purpose, bit ACKF in the control byte PIN has been set, which means that acknowledgement of every device is required. Bytes MPRW0, MPRW1, MPRW2 intended for direct addressing of peripherals and services in wireless networks, as described in the invention application CZ PV 2008-288, were used for further additional and control data, e.g. for timing of the acknowledgement message.

The highest data bit from every network slave communication device N is reserved for validation of data of the network device, whereas it is used for subsequent merging of repeatedly received data as apparent from Table 1 using logical function OR.

As the specific example of the implementation on the TR-52D transceiver modules illustrates, implementing the described technical solution is easy due to its low hardware requirements. For implementing the whole added functionality of the new functional ordering of the wireless network and new routing method in such a network, less than 1 kW of program memory of the PIC16F1938 microcontroller were used.

### Industrial use

The invention may be used for improving communication in wireless networks, for ensuring more efficient management of wireless networks and for speeding up data collection in telemetric networks. The invention is easy to implement, has low requirements on used hardware, and thanks to its support of multiple routing may be successfully used for telemetry systems, large sensor networks or systems of automated data reading.

## Claims

1. Method of message acknowledgement and/or data collection from communication devices with packet transmission of messages in wireless mesh networks, intended particularly for telemetry and automation, where each mesh network includes at least one control communication device (C) and a set of slave communication devices (N), and the control communication device (C) searches through the mesh network so that a unique virtual routing number (VRN) for that network, expressing the distance of the slave communication device (N) from the control communication device (C) determined by the number of routings, is assigned to every found slave communication device (N) and stored into its memory, and in the network arranged in this way, control messages are transmitted from the control communication device (C) and back through directional flooding, **characterized in that** in every addressed slave communication device (N) after reception of the initiation message from the control communication device (C), through which the control communication device (C) initiates data collection from slave communication devices (N) that are relatively time-synchronised to the beginning of the initiation frame, a bit or a number of bits are set, which then gradually merge with acknowledgement collective messages received from other addressed slave communication devices (N) during the acknowledgement frame that is time-synchronised to the initiation frame, whereas consequently such merged acknowledgement collective messages are gradually sent by the slave communication devices (N) in the corresponding time slot of that acknowledgement frame from the highest virtual routing number (VRN) towards the control communication device (C).

2. Method according to claim 1, **characterized in that** the initiation message from the control communication device (C), routed to slave communication devices (N), may have additional information inserted and in every addressed slave communication device (N) this information is interpreted and the required sequence of instructions is performed based on this interpretation and independently from it or based on its result, one or several bits are set, which are then inserted into the collective acknowledgement message addressed to the control communication device (C).

3. Method according to claim 1 or 2, **characterized in that** the timing of the acknowledgement frame is performed depending on the additional information inserted into the initiation message from the control communication device (C).

4. Method of making bulk acknowledgement and/or data collection accessible according to any of the preceding claims 1 to 3 for creation of a generic platform, **characterized in that** it is implemented as a directly addressable virtual peripheral in wireless networks so that such peripheral is served based on interpretation of messages sent by communication devices (N) or (C) in the wireless network.

## Patentansprüche

1. Verfahren zur Nachrichtenbestätigung und/oder Datensammlung mit Paketübertragung von Nachrichten in Drahtlos-Maschennetzwerken arbeitenden Kommunikationsvorrichtungen, insbesondere in der Telemetrie und Automation,
wobei jedes Maschennetzwerk mindestens eine Steuer-Kommunikationsvorrichtung (C) und mehrere Slave-Kommunikationsvorrichtungen (N) enthält und die Steuer-Kommunikationsvorrichtung (C) das Maschennetzwerk durchsucht, so dass jeder gefundenen Slave-Kommunikationsvorrichtung (N) eine eindeutige virtuelle Routing-Nummer (VRN) für dieses Netzwerk, die die durch die Anzahl der Weiterleitung (Routing) bestimmte Entfernung der Slave-Kommunikationsvorrichtung (N) von der steuernden Kommunikationsvorrichtung (C) ausdrückt, zugewiesen und in deren Speicher abgelegt wird, und in dem so angeordneten Netzwerk mittels gerichteten Flutens Steuernachrichten von der steuernden Kommunikationsvorrichtung (C) aus- und zurückgesendet werden, **dadurch gekennzeichnet, dass** in jeder adressierten Slave-Kommunikationsvorrichtung (N) nach Empfang der Initiierungsnachricht aus der Steuer-Komrnunikatiönsvorrichtung (C), mittels der letztere die Datensammlung aus mit dem Beginn des Initiierungsblocks zeitsynchronisierten Slave-Kommunikationseinrichtungen (N) startet, ein oder mehr Bits gesetzt werden, die dann schrittweise mit kollektiven Bestätigungsnachrichten zusammengefügt werden, die während des mit dem Beginn des Initiierungsblocks zeitsynchronisierten Bestätigungsblocks aus anderen adressierten Slave-Kommunikationsvorrichtungen (N) empfangen werden, und dann solche zusammengesetzten kollektiven Bestätigungsnachrichten von den Slave-Kommunikationsvorrichtungen (N) im entsprechenden Zeitfenster des jeweiligen Bestätigungsblocks schrittweise von der höchsten virtuellen Routing-Nummer (VRN) zur steuernden Kommunikationsvorrichtung (C) gesendet werden.

2. Verfahren nach Anspruch 1, **dadurch gekennzeichnet, dass** in die zu den Slave-Kommunikationsvorrichtungen (N) gesendete Initiierungsnachricht aus der Steuer-Kommunikationseinrichtung (C) zusätzliche Informationen eingefügt werden können und diese Informationen in jeder angesprochenen Slave-Kommunikationsvorrichtung (N) interpretiert und auf Grund dieser Interpretation die erforderliche Befehlsfolge ausgeführt und unabhängig davon oder auf Grund des Ergebnisses ein oder mehr Bits gesetzt und dann in die an die Steuer-Kommunikationsvorrichtung (C) adressierte kollektive Bestätigungsnachricht eingefügt werden.

3. Verfahren nach Anspruch 1 oder 2, **dadurch gekennzeichnet, dass** das Timing des Bestätigungsblocks abhängig von den in die Initiierungsnachricht aus der Steuer-Kommunikationsvorrichtung (C) eingefügten zusätzlichen Informationen erfolgt.

4. Verfahren zum Zugänglichmachen einer Massenbestätigung und/oder -Datensammlung nach einem der vorgehenden Ansprüche 1 bis 3 zum Schaffen einer allgemeinen Plattform, **dadurch gekennzeichnet, dass** es in Drahtlos-Netzwerken als direkt adressierbares virtuelles Peripheriegerät implementiert wird derart, dass ein solches Peripheriegerät auf Grund der Interpretation von im Drahtlos-Netzwerk von Kommunikationsvorrichtungen (N) oder (C) gesendeten Nachrichten bedient wird.

## Revendications

1. Procédé d'acquittement de message et/ou de collecte de données provenant de dispositifs de communication avec transmission de messages par paquets dans des réseaux maillés sans fil, en particulier destiné à la télémesure et à l'automatisation, dans lequel chaque réseau maillé inclut au moins un dispositif de communication maître (C) et un ensemble de dispositifs de communication esclaves (N), et le dispositif de communication maître (C) effectue une recherche dans le réseau maillé de sorte qu'un numéro de routage virtuel (VRN) unique pour ce réseau, exprimant la distance du dispositif de communication esclave (N) par rapport au dispositif de communication maître (C) déterminée par le nombre de routages, est attribué à chaque dispositif de communication esclave (N) trouvé et stocké dans sa mémoire, et dans le réseau organisé de cette manière, des messages de contrôle sont transmis à partir du dispositif de communication maître (C) et retransmis par inondation directionnelle, **caractérisé en ce que** dans chaque dispositif de communication esclave (N) adressé, après réception du message de déclenchement provenant du dispositif de communication maître (C), par lequel le dispositif de communication maître (C) déclenche la collecte de données à partir des dispositifs de communication esclaves (N) qui sont synchronisés dans le temps de manière relative sur le début de la trame de déclenchement, un bit ou un nombre de bits sont fixés, lesquels fusionnent ensuite graduellement avec des messages collectifs d'acquittement reçus des autres dispositifs de communication esclaves (N) adressés pendant la trame d'acquittement qui est synchronisée dans le temps sur la trame de déclenchement, alors que, en conséquence, ces messages collectifs d'acquittement fusionnés sont graduellement envoyés par les dispositifs de communication esclaves (N) dans l'intervalle de temps correspondant de cette trame d'acquittement à partir du numéro de routage virtuel (VRN) le plus élevé vers le dispositif de communication maître (C).

2. Procédé selon la revendication 1, **caractérisé en ce que** le message de déclenchement provenant du dispositif de communication maître (C), transmis aux dispositifs de communication esclaves (N), peut avoir des informations supplémentaires insérées et dans chaque dispositif de communication esclave (N) adressé, ces informations sont interprétées et la séquence d'instructions requise est exécutée sur la base de cette interprétation et indépendamment d'elle ou sur la base de son résultat, un ou plusieurs bits sont fixés, lesquels sont ensuite insérés dans les messages d'acquittement collectifs adressés au dispositif de communication maître (C).

3. Procédé selon la revendication 1 ou 2, **caractérisé en ce que** la synchronisation de la trame d'acquittement est exécutée en fonction des informations supplémentaires insérées dans le message de déclenchement provenant du dispositif de communication maître (C).

4. Procédé destiné à rendre accessible un acquittement de masse et/ou une collecte de données en masse selon l'une quelconque des revendications 1 à 3 précédentes pour la création d'une plate-forme générique, **caractérisé en ce qu'**il est mis en oeuvre sous la forme d'un périphérique virtuel directement adressable dans des réseaux sans fil de sorte qu'un tel périphérique est desservi sur la base de l'interprétation de messages envoyés par des dispositifs de communication (N) ou (C) dans le réseau sans fil.
